# EUROPÄISCHE PATENTSCHRIFT

(11) **EP 1 313 965 B1**
(45) Veröffentlichungstag und Bekanntmachung des Hinweises auf die Patenterteilung: **30.06.2004**
(21) Anmeldenummer: 01956330.3
(22) Anmeldetag: 18.07.2001
(51) Int. Cl.: F16H 25/22

(54) **VORRICHTUNG ZUR UMWANDLUNG EINER DREH- IN EINE AXIALBEWEGUNG**
DEVICE FOR CONVERTING A ROTATIONAL MOVEMENT INTO AN AXIAL MOVEMENT
DISPOSITIF PERMETTANT DE TRANSFORMER UN MOUVEMENT DE ROTATION EN MOUVEMENT AXIAL

(30) Priorität: 21.12.2000 DE 10063772
(43) Veröffentlichungstag der Anmeldung: 28.05.2003
(73) Patentinhaber: Wittenstein Motion Control GmbH, 97999 Igersheim (DE)
(72) Erfinder: BUTSCH, Michael, 88718 Daisendorf (DE); BREHMER, Martin, 78464 Konstanz (DE)
(74) Vertreter: Patentanwalts-Partnerschaft, Rotermund + Pfusch + Bernhard
(86) Internationale Anmeldenummer: PCT/DE2001/002680
(87) Internationale Veröffentlichungsnummer: WO 2002/050453

(56) Entgegenhaltungen:
- WO-A-00/49313
- WO-A-97/03308
- WO-A-97/25554
- US-A- 3 214 991
- US-A- 3 406 584
- US-A- 3 585 869
- US-A- 5 121 019
- US-A- 5 557 154
- US-A- 6 026 696

## Beschreibung

Die Erfindung betrifft eine Vorrichtung zur Umwandlung einer Dreh- in eine Axialbewegung nach dem Oberbegriff des Patentanspruchs 1.

Eine solche Einrichtung ist aus WO-A-97/03308 bekannt.

Die Erfindung beschäftigt sich mit dem Problem, diese Einrichtung funktionell zu verbessern und zwar insbesondere hinsichtlich eines absolut schlupffreien Getriebes bei einer äußerst hohen Übersetzungsgenauigkeit zwischen Antriebsdrehund Abtriebsschubbewegung. Bei einer gattungsähnlichen Einrichtung, die aus US-A-3,214,991 bekannt ist, werden zwar der Träger und der Lagerkörper bereits in einem Drehzahlverhältnis angetrieben, durch das Schlupffreiheit zwischen den Planetenrollen und dem Schubkörper garantiert ist, die Antriebswelle ist dort jedoch mit erheblichem parallelen Abstand zur Achse des Schubkörpers angeordent, woraus eine sperrige Bauweise resultiert.

Gelöst wird das erfindungsgemäße Problem durch eine Ausführung der gattungsgemäßen Einrichtung nach den kennzeichnenden Merkmalen des Patentanspruchs 1.

Die Rotationsbewegungen zwischen der Antriebswelle mit dem Lagerkörper, den in den Schubkörper eingreifenden Planetenrollen und dem diese Planetenrollen tragenden Träger werden zwangsgeführt erzeugt, wodurch ein verdrehfrei gelagerter Schubkörper absolut übersetzungsgenau, d.h. winkelgetreu zur Antriebsdrehbewegung antreibbar ist. Zur Erzielung der schlupffreien Kraftübertragung zwischen den einzelnen Teilen dient die gegeneinander verzahnte Zwangsführung. Die gattungsgemäße Antriebseinrichtung ist dem Prinzip nach ein Planetengetriebeantrieb mit dem Lagerkörper als Sonne, und dem Schubkörper als Hohlrad, zwischen denen die in einem Planetenträger gelagerten Planeten kämmen.

Ein Schlupf zwischen den einzelnen, sich gegenseitig antreibenden Teilen ist dadurch ausgeschlossen, daß durch eine verdrehfeste Lagerung des Schubkörpers einerseits Rutschbewegungen zwischen der Sonne und den Planeten ausgeschlossen sind und dass andererseits der Planeten-Träger durch ein Schlupffreiheit garantierendes Drehzahlenverhältnis zu dem Lagerkörper zwangsgeführt ist.

Die Steigung der Wellen des Lagerkörpers und der Planeten ist gegensinnig zu wählen, wobei je nach Durchmesserverhältnis der Rillen von Lagerkörper und Planeten die Rillen-Gangzahl bei beiden Teilen unterschiedlich sein kann bzw. muss.

Die Steigung der Rillen an dem Schubkörper und den Planetenrollen kann gleich- oder gegensinnig sein. Bei gleichsinniger Auslegung kann mit dem Antrieb eine hohe Kraftübersetzung bei hohen Drehzahlen und kleinem Schubweg erzeugt werden. Eine gegensinnige Steigung zwischen den Rillen des Schubkörpers und der Planetenrollen eignet sich für Anwendungsfälle, in denen eine relativ hohe Verschiebegeschwindigkeit des Schubkörpers gegenüber einer hohen Kraftübertragung im Vordergrund steht.

Zweckmäßige Ausgestaltungen und Anwendungen der erfindungsgemäßen Einrichtung sind Gegenstand der Unteransprüche.

Erfindungsgemäß können für den Lagerkörper und den Träger zwei voneinander unabhängige Antriebe eingesetzt werden, sofern diese nur in dem erfindungsgemäß erforderlichen Drehzahlenverhältnis zueinander arbeiten. Zweckmäßigerweise wird jedoch eine gemeinsame Antriebsquelle eingesetzt, die über eine Antriebswelle von den beiden Elementen "Lagerkörper und Träger" eines direkt und das jeweils andere über ein Übersetzungsgetriebe antreibt. Als ein solches Übersetzungsgetriebe eignet sich insbesondere ein Planetengetriebe.

Besonders vorteilhaft ist ein Einsatz der erfindungsgemäßen Einrichtung als Verstellantrieb einer breitenverstellbaren Riemenscheibe eines stufenlos verstellbaren Riemengetriebes, für insbesondere Fahrzeugantriebe.

Ein solcher Verstellantrieb kann zentral hohl ausgebildet werden, und damit auf einfache Weise direkt auf der Riemenscheibenachse für einen verdrehfesten Umlauf mit dieser montiert werden. Der Antriebsmotor kann als Hohlwelle im Hohlraum der Antriebswelle angeordnet werden, das heißt in einem Ringraum zwischen der Antriebswelle bzw. dem mit dieser verbundenen Lagerkörper und der Riemenscheibenwelle. Die Verstellung der breitenverstellbaren Riemenscheibe erfolgt durch den Schubkörper der erfindungsgemäßen Einrichtung, wozu dieser fest mit der betreffenden Riemenscheibe, die längsverschiebbar auf der Riemenscheibenwelle gelagert ist, verbunden ist.

Mit einer erfindungsgemäßen Verstelleinrichtung können beispielsweise Spritzgußmaschinen in äußerst vorteilhafter Weise ausgerüstet sein.

Ein besonders zweckmäßiges, nachstehend noch näher erläutertes Ausführungsbeispiel ist in der Zeichnung dargestellt.

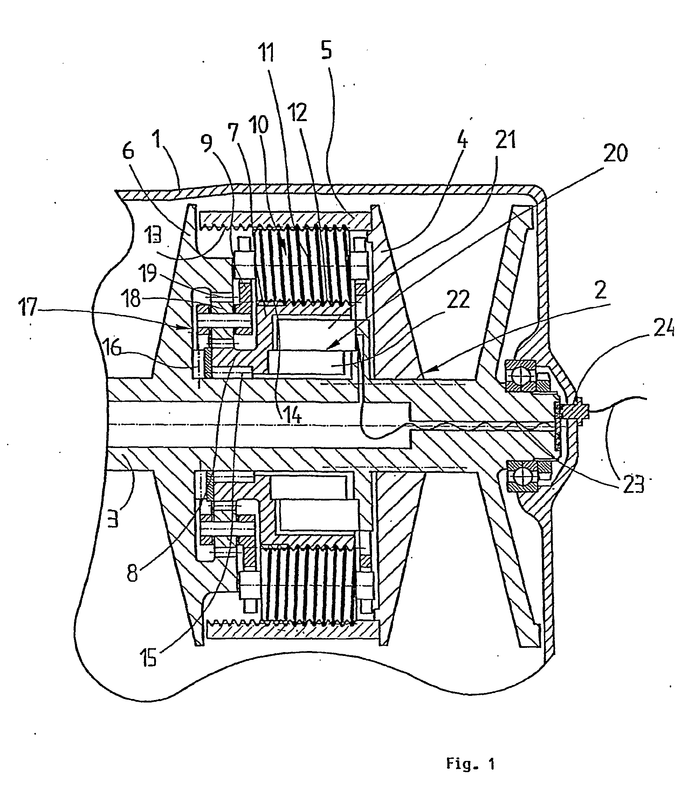

In dieser zeigt die einzige
- Fig. 1: einen Längsschnitt durch einen Riemenscheiben-Verstellantrieb bei einem stufenlos verstellbaren Fahrzeugantrieb-Riemengetriebe.

In einem Gehäuse 1 ist bei einem stufenlos verstellbaren Riemengetriebe eines Fahrzeugantriebes eine Riemenscheibe 2 über eine Riemenscheibenwelle 3 drehbar gelagert. Die Riemenscheibenwelle 3 ist Bestandteil der Kraftfahrzeugmotorwelle oder zumindest mit dieser verbunden.

Die Riemenscheibe 2 ist breitenmäßig bezüglich ihres Aufnahmeraumes für den Riemen des Riementriebes verstellbar, wozu sie einen auf der Riemenscheibenwelle 3 längsverschiebbaren Riemenscheiben-Bereich 4 besitzt. Dieser Riemenscheibenbereich wird von einem Schubkörper 5 der erfindungsgemäßen Antriebseinrichtung verstellt.

Die erfindungsgemäße Antriebseinrichtung mit dem Schubkörper 5 ist wie folgt aufgebaut.

Auf der Riemenscheibenwelle 3 drehbar gelagert und axial gegen ein fest mit der Riemenscheibenwelle 3 verbundenes Tragelement 6 wälzgelagert abgestützt rotiert eine mit einem Lagerkörper 7 fest verbundene Antriebswelle 8. Zwischen dem Lagerkörper 7 und dem Schubkörper 5 kämmen einerseits in den Lagerkörper 7 und andererseits in den Schubkörper 5 eingreifende, in einem Träger 9 gelagerte Planetenrollen 10.

Der Lagerkörper 7 und die Planetenrollen 10 sind mit ineinandergreifenden Rillen 11 bzw. 12 mit gegensinniger Steigung versehen. Die Rillen 11 der Planetenrollen 10 greifen in Rillen 13 mit gleich- oder gegensinniger Steigung des Schubkörpers 5 ein.

Eine gleichsinnige Steigung der Rillen von Schubkörper 5 und Planetenrollen 10 wird gewählt für geringe Verstellgeschwindigkeiten des Schubkörpers bei zu übertragenden hohen Kräften, während eine gegensinnige Steigung für schnelle Verstellgeschwindigkeiten bei relativ gering zu übertragenden Kräften realisiert wird.

Zur Erzielung einer absolut sicheren Schlupffreiheit der Drehbewegungen, d.h. einer drehwinkelgenauen Übersetzung, zwischen dem Lagerkörper 7 und den Planetenrollen 10 dient ein ineinandergreifender Verzahnungsbereich 14. In diesem Verzahnungsbereich 14 besitzt der Lagerkörper 7 keine Rillen 12, d.h. auf dem Lagerkörper 7 befindet sich in diesem Bereich eine normale Stirnverzahnung. Bei den Planetenrollen 10 greift die Verzahnung 14 dagegen in die dortigen Rillen 11 ein. Die Einformung des Verzahnungsbereiches 14 in die Planetenrollen 10 muss derart erfolgen, dass deren Rillen 11 unbehindert in die Rillierung des Schubkörpers 5 eingreifen kann.

Für die Lagerung der Antriebswelle 8 mit dem Lagerkörper 7 auf der Riemenscheibenwelle 3 und gegenüber dem Tragelement 6 dienen ein Radiallager 15 zwischen der Antriebswelle 8 und der Riemenscheibenwelle 3 sowie ein Axiallager 16 zwischen der Antriebswelle 8 und dem mit der Riemenscheibenwelle 3 fest verbundenen Tragelement 6.

Die Steigung und Gangzahl der Rillen 11 bis 13 an dem Lagerkörper 7, den Planetenrollen 10 und dem Schubkörper 5 sowie die Rillen-Gangzahl sind in getriebetechnisch bekannter Weise für einen funktionsgemäßen Betrieb und die Erzielung eines gewünschten Übersetzungsverhältnisses zwischen Drehantrieb und Schubabtrieb in an sich bekannter Weise einzustellen.

Zur Unterbindung eines Schlupfes, d.h. einer Drehwinkel/Verstellweg-Abweichung, zwischen den Planetenrollen 10 und dem Schubkörper 5 ist für eine Zwangsführung des Trägers 9 in einem vorgegebenen, Schlupffreiheit sichernden Drehzahlverhältnis von Träger 9 und Antriebswelle 8 ein Zusatzantrieb 17 vorgesehen. Dieser Zusatzantrieb 17 könnte an sich eine beliebige Antriebsquelle besitzen. In dem vorliegenden Ausführungsbeispiel dient die Antriebswelle 8 als Antriebsquelle für den Zusatzantrieb 17, der in der Form eines Planetenzahnradgetriebes mit der Antriebswelle 8 als Sonne und dem Träger 9 der mit dem Schubkörper 5 in Eingriff befindlichen Planetenrollen 10 als Umlaufträger für in diesem gelagerte Planetenzahnräder 18, die sich in einem in das Tragelement 6 eingeformten Hohlzahnrad 19 abwälzen, ausgebildet ist. Das Übersetzungsverhältnis dieses Planetenzahnradgetriebes ist so auszulegen, dass der Träger 9 mit den in den Schubkörper 5 eingreifenden Planetenrollen 10 zwangsweise mit einer solchen Winkelgeschwindigkeit dreht, wie sie für einen schlupffreien, d.h. winkelgenauen, Betrieb zwischen den Planetenrollen 10 und dem Schubkörper 5 notwendig ist.

Als Antriebsmotor für die Antriebswelle 8 dient ein elektrischer Hohlwellen-Motor 20 mit einem fest mit der Riemenscheibenwelle 3 verbundenen Stator 21 und einem fest mit der Antriebswelle 8 verbundenen Rotor 22. Der Hohlwellen-Motor 20 ist in einem Ringraum zwischen dem Lagerkörper 7 und der Riemenscheibenwelle 3 äußerst raumsparend untergebracht. Die Stromversorgung des Hohlwellen-Motors 20 erfolgt über eine innerhalb der Riemenscheibenwelle 3 vorgesehene elektrische Leitung 23, die über einen Schleifkontakt 24 mit Strom versorgt wird.

Mit dem Hohlwellen-Motor 20 als Antriebsquelle kann der Riemenscheibenbereich 4 mittels des Schubkörpers 5 auf einfache Weise zur Breitenverstellung der Riemenscheibe 2 bewegt werden.

Ein besonderer Vorteil des Einsatzes der erfindungsgemäßen Antriebseinrichtung bei einem stufenlos verstellbaren Riemengetriebe besteht darin, dass der gesamte Antrieb einschließlich Antriebsquelle fest auf der sich drehenden Riemenscheibenwelle 3 vorgesehen werden kann. Hierdurch ergibt sich ein besonders einfacher Aufbau des Verstellantriebes.

Bei der vorstehend beschriebenen Anwendung als Riemenscheibenverstelleinrichtung sind die Rillen der Planetenrollen 10 und des Schubkörpers 5 mit gleichsinniger Steigung ausgebildet.

## Patentansprüche

1. Vorrichtung zur Umwandlung einer Dreh- in eine Axialbewegung mit angetriebenen, umfangsmäßig auf gleichem Abstand gehaltenen Planetenrollen (10) und einem durch die Planetenrollen (10) axial verschiebbaren Schubkörper (5), bei der
(a) die Planetenrollen (10) in einem rotierenden Träger (9) axial fixiert, drehbar gelagert und mit Rillen (11) versehen sind,
(b) die Planetenrollen (10) über die Rillen (11) in mindestens eine gewindeartige Rille (13) des längs der Achse des Trägers (9) verschiebbaren Schubkörpers (5) eingreifen,
(c) der Schubkörper (5) als ein die Planetenrollen (10) umfassender Hohlkörper ausgebildet ist,
(d) im Zentrum des Trägers (9) radial innerhalb der Planetenrollen (10) ein um dessen Achse drehbarer, axial fixierter Lagerkörper (7) mit in die Rillen (11) der Planetenrollen (10) eingreifenden Rillen (12) vorgesehen ist,
(e) die Rillen (11) der Planetenrollen (10) sowie die Rillen (12) des Lagerkörpers (7) eine aufeinander abgestimmte Steigung besitzen,
(f) die Planetenrollen (10) und der Lagerkörper (7) schlupffrei miteinander über einen Verzahnungsbereich (14) verzahnt sind,
**gekennzeichnet durch** die Merkmale,
(g) der Träger (9) und der Lagerkörper (7) werden in einem Drehzahlverhältnis angetrieben, **durch** das Schlupffreiheit zwischen den Planetenrollen (10) und dem Schubkörper (5) garantiert ist, wobei der Träger (9) und der Lagerkörper (7) von einer gemeinsamen Antriebswelle (8) angetrieben werden.
(h) die Antriebswelle (8) weist einen als Sonnenrad wirkenden Bereich auf, mit welchem sie den Träger (9) in der Art eines Planetenzahnradgetriebes über sich in einem gegenüber der Antriebswelle (8) feststehenden Hohlzahnrad (19) abwälzende Planetenzahnräder (18) antreibt.

2. Vorrichtung nach Anspruch 1,
**dadurch gekennzeichnet,**
**dass** die Antriebswelle (8) fest mit dem Lagerkörper (7) verbunden ist.

3. Vorrichtung nach Anspruch 1 oder 2,
**dadurch gekennzeichnet,**
**dass** die Antriebswelle (8) zusammen mit dem Lagerkörper (7) in Längsrichtung durchgehend hohl ausgebildet ist.

4. Vorrichtung nach einem der vorhergehenden Ansprüche,
**dadurch gekennzeichnet,**
**dass** als Antriebsmotor für die Antriebswelle (8) ein elektrischer, innerhalb des zentralen Hohlraumes von Antriebswelle (8) und/oder Lagerkörper (7) vorgesehener Hohlwellen-Motor (20) ausgebildet ist, dessen Rotor (22) die Antriebswelle (8) antreibt.

5. Vorrichtung nach einem der vorhergehenden Ansprüche als Verstellantrieb einer breitenverstellbaren Riemenscheibe (2) eines stufenlos verstellbaren Riemengetriebes, für insbesondere Fahrzeugantriebe.

6. Vorrichtung nach Anspruch 5,
**dadurch gekennzeichnet,**
**dass** der Stator (21) des Hohlwellen-Motors (20) fest mit der Riemenscheibenwelle (3) des Riemengetriebes verbunden ist.

7. Vorrichtung nach Anspruch 6,
**gekennzeichnet durch** die Merkmale
- die Riemenscheibenwelle (2) durchgreift den Hohlraum der Antriebswelle (8) sowie des mit dieser verbundenen Lagerkörpers (7),
- der Rotor (22) des Hohlwellen-Motors (20) ist auf der Riemenscheibenwelle (3) drehbar gelagert,
- der Schubkörper (5) ist fest mit dem breitenverstellbaren Bereich (4) der längsverschiebbar auf der Riemenscheibenwelle (3) gelagerten Riemenscheibe (2) verbunden,
- ein mit der Riemenscheibenwelle (3) fest verbundenes Tragelement (6) dient als Widerlager für die Antriebswelle (8) mit Lagerkörper (7), den Planetenrollen-Träger (9) mit den in den Schubkörper (5) eingreifenden Planetenrollen (10) und die Planetenrollen-Träger (9) - Zusatzantriebselemente.

8. Vorrichtung nach einem der Ansprüche 1 bis 7 als Verstellantrieb für eine Spritzgußmaschine

## Claims

1. A device for converting a rotational movement into an axial movement with driven planetary rollers (10), kept at the same distance peripherally, and with a sliding body (5) axially displaceable by means of the planetary rollers (10), in which
(a) the planetary rollers (10) are fixed axially in a rotating carrier (9), are rotationally mounted and provided with grooves (11),
(b) the planetary rollers (10) engage via the grooves (11) in at least one thread-type groove (13) of the sliding body (5) displaceable along the axis of the carrier (9),
(c) the sliding body (5) is designed as a hollow body enclosing the planetary rollers (10),
(d) an axially attached bearing body (7) rotating about its axis, is provided in the centre of the carrier (9) radially inside the planetary rollers (10) with grooves (12) engaging in the grooves (11) of the planetary rollers (10),
(e) the grooves (11) of the planetary rollers (10) and the grooves (12) of the bearing body (7) have a mutually adapted gradient,
(f) the planetary rollers (10) and the bearing body (7) are geared with one another devoid of slip via a toothed region (14),
**characterised by** the features
(g) the carrier (9) and the bearing body (7) are driven at a rotational relationship, ensuring freedom from slip between the planetary rollers (10) and the sliding body (5), whereby the carrier (9) and the bearing body (7) are driven by a common drive shaft (8).
(h) the drive shaft (8) has a region acting as a sun wheel and with this drives the carrier (9) in the form of a planetary toothed gearing by way of seesawing planetary toothed wheels (18) in a hollow toothed wheel (19) fixed relative to the drive shaft (8).

2. The device as claimed in Claim 1, **characterised in that** the drive shaft (8) is connected integrally to the bearing body (7).

3. The device as claimed in Claim 1 or 2, **characterised in that** the drive shaft (8) is designed continuously hollow together with the bearing body (7) in a longitudinal direction.

4. The device as claimed in any one of the foregoing claims, **characterised in that** (8) an electrical hollow-shaft motor (20), fitted inside the central cavity of drive shaft (8) and/or bearing body (7), whose rotor (22) drives the drive shaft (8) is designed as a drive motor for the drive shaft.

5. The device as claimed in any one of the foregoing claims as an adjustable drive of a width-adjustable pulley (2) of an infinitely variably adjustable belt transmission, for vehicle transmissions in particular.

6. The device as claimed in Claim 5, **characterised in that** the stator (21) of the hollow shaft motor (20) is connected solidly to the pulley shaft (3) of the pulley.

7. The device as claimed in Claim 6, **characterised by** the features
- the pulley shaft (2) penetrates the cavity of the drive shaft (8) as well as of the bearing body (7) connected thereto,
- the rotor (22) of the hollow shaft motors (20) is rotationally mounted on the pulley shaft (3),
- the sliding body (5) is connected integrally to the width-adjustable region (4) of the pulley (2) mounted to shift longitudinally on the pulley shaft (3),
- a supporting member (6) connected integrally to the pulley shaft (3) serves as abutment for the drive shaft (8) with bearing body (7), the planetary rollers-carrier (9) with the planetary rollers (10) engaging in the sliding body (5) and the planetary rollers-carrier (9) accessory drive elements.

8. The device as claimed in any one of Claims 1 to 7 as an adjustable drive for an injection moulding machine.

## Revendications

1. Dispositif pour transformer un mouvement de rotation en un mouvement axial, comprenant des rouleaux satellites (10) entraînés maintenus à distance égale dans la direction périphérique, et un corps de poussée (5) pouvant être déplacé dans la direction axiale par les rouleaux satellites (10), dans lequel
(a) les rouleaux satellites (10) sont fixés dans la direction axiale dans un support rotatif (9), montés tournants et munis de rainures (11),
(b) les rouleaux satellites (10) s'engagent par l'intermédiaire des rainures (11) dans au moins une rainure (13) en forme de filetage du corps de poussée (5) mobile le long de l'axe du support (9),
(c) le corps de poussée (5) est réalisé sous forme d'un corps creux entourant les rouleaux satellites (10),
(d) un corps de palier (7) fixé dans la direction axiale, tournant autour de son axe, avec des rainures (12) s'engageant dans les rainures (11) des rouleaux satellites (10), est prévu au centre du support (9) radialement à l'intérieur des rouleaux satellites (10),
(e) les rainures (11) des rouleaux satellites (10) ainsi que les rainures (12) du corps de palier (7) présentent un pas mutuellement adapté,
(f) les rouleaux satellites (10) et le corps de palier (7) engrènent entre eux sans glissement par l'intermédiaire d'une zone de denture (14),
**caractérisé par** les particularités suivantes,
(g) le support (9) et le corps de palier (7) sont entraînés dans un rapport de vitesses de rotation qui garantit l'absence de glissement entre les rouleaux satellites (10) et le corps de poussée (5), le support (9) et le corps de palier (7) étant entraînés par un arbre moteur (8) commun,
(h) l'arbre moteur (8) présente une zone faisant office de roue solaire, par laquelle il entraîne le support (9) à la manière d'un engrenage planétaire par l'intermédiaire de pignons satellites (18) roulant dans une roue à denture intérieure (19) stationnaire par rapport à l'arbre moteur (8).

2. Dispositif suivant la revendication 1,
**caractérisé en ce**
**que** l'arbre moteur (8) est relié fixement au corps de palier (7).

3. Dispositif suivant l'une des revendications 1 et 2,
**caractérisé en ce**
**que** l'arbre moteur (8), avec le corps de palier (7), a une configuration continuellement creuse dans la direction longitudinale.

4. Dispositif suivant l'une des revendications précédentes,
**caractérisé en ce**
**qu'**un moteur à arbre creux (20) électrique prévu à l'intérieur de l'espace creux central de l'arbre moteur (8) et/ou du corps de palier (7), dont le rotor (22) entraîne l'arbre moteur (8), est réalisé comme moteur d'entraînement pour l'arbre moteur (8).

5. Dispositif suivant l'une des revendications précédentes en tant que commande de réglage d'une poulie à courroie (2) réglable en largeur d'une transmission par courroie réglable en continu, en particulier pour transmissions de véhicules.

6. Dispositif suivant la revendication 5,
**caractérisé en ce**
**que** le stator (21) du moteur à arbre creux (20) est relié fixement à l'arbre de poulie à courroie (3) de la transmission par courroie.

7. Dispositif suivant la revendication 6,
**caractérisé par** les particularités suivantes
- l'arbre de poulie à courroie (3) traverse l'espace creux de l'arbre moteur (8) ainsi que du corps de palier (7) relié à ce dernier,
- le rotor (22) du moteur à arbre creux (20) est monté tournant sur l'arbre de poulie à courroie (3),
- le corps de poussée (5) est relié fixement à la zone réglable en largeur (4) de la poulie à courroie (2) montée avec une possibilité de déplacement longitudinal sur l'arbre de poulie à courroie (3),
- un élément support (6) relié fixement à l'arbre de poulie à courroie (3) sert de butée pour l'arbre moteur (8) avec corps de palier (7), le support (9) de rouleaux satellites avec les rouleaux (10) s'engageant dans le corps de poussée (5), et les éléments d'entraînement supplémentaires du support (9) de rouleaux satellites.

8. Dispositif suivant l'une des revendications 1 à 7 en tant que commande de réglage pour une machine de moulage par injection.
